# EUROPÄISCHE PATENTSCHRIFT

(11) **EP 3 189 707 B1**
(45) Veröffentlichungstag und Bekanntmachung des Hinweises auf die Patenterteilung: **25.09.2019**
(21) Anmeldenummer: 15759417.7
(22) Anmeldetag: 19.08.2015
(51) Int. Cl.: H05B 3/84, H05B 3/12, H05B 3/86

(54) **TRANSPARENTE SCHEIBE MIT HEIZBESCHICHTUNG**
TRANSPARENT SURFACE WITH THERMAL COATING
PLAQUE TRANSPARENTE AVEC REVÊTEMENT THERMIQUE

(30) Priorität: 04.09.2014 EP 14183519
(43) Veröffentlichungstag der Anmeldung: 12.07.2017
(73) Patentinhaber: Saint-Gobain Glass France, 92400 Courbevoie (FR)
(72) Erfinder: SCHALL, Günther, 52372 Kreuzau (DE); REUL, Bernhard, 52134 Herzogenrath (DE); PHAN, Dang Cuong, 52062 Aachen (DE)
(74) Vertreter: Gebauer, Dieter Edmund
(86) Internationale Anmeldenummer: PCT/EP2015/069002
(87) Internationale Veröffentlichungsnummer: WO 2016/034414

(56) Entgegenhaltungen:
- WO-A1-00/72635
- WO-A1-2011/006743
- DE-C1- 4 316 575
- US-A- 5 414 240

## Beschreibung

Die Erfindung betrifft nach ihrer Gattung eine heizbare transparente Scheibe mit einer elektrisch heizbaren Beschichtung nach dem Oberbegriff von Patentanspruch 1.

Außerdem betrifft die Erfindung ein Verfahren zur Herstellung einer heizbaren transparenten Scheibe.

Nicht zuletzt betrifft die Erfindung die Verwendung einer heizbaren transparenten Scheibe.

Die Inhalte der nachstehend aufgeführten Dokumente des Standes der Technik sind in vollem Umfang Bestandteil der vorliegenden Anmeldung.

Heizbare transparente Scheiben mit einer elektrischen Heizschicht sind als solche bekannt und bereits vielfach in der Patentliteratur beschrieben worden. Lediglich beispielhaft sei in diesem Zusammenhang auf die deutsche Offenlegungsschriften DE 102008018147 A1, DE 102008029986 A1 und WO 00/72635 A1 verwiesen. In Kraftfahrzeugen werden sie häufig als Windschutzscheiben eingesetzt, da das zentrale Sichtfeld aufgrund gesetzlicher Vorgaben, mit Ausnahme von Heizdrähten, keinerlei Sichteinschränkungen aufweisen darf. Durch die von der Heizschicht erzeugte Wärme können binnen kurzer Zeit kondensierte Feuchtigkeit, Eis und Schnee entfernt werden. Meist werden solche Scheiben als Verbundscheiben hergestellt, in denen zwei Einzelscheiben durch eine thermoplastische Klebeschicht miteinander verbunden sind. Die Heizschicht kann auf eine der inneren Oberflächen der Einzelscheiben aufgebracht sein, wobei aber auch Aufbauten bekannt sind, bei denen sie sich auf einem Träger befindet, der zwischen den beiden Einzelscheiben angeordnet ist.

Die Heizschicht ist in der Regel mit mindestens einem Paar streifen- bzw. bandförmigen Sammelleitungen ("Busbars") elektrisch verbunden, die den Heizstrom möglichst gleichmäßig in die Beschichtung einleiten und auf breiter Front verteilen sollen. Für eine ansprechende ästhetische Erscheinung der Scheibe werden die undurchsichtigen Sammelleitungen durch opake Maskierungsstreifen verdeckt.

Allgemein kann die spezifische Heizleistung P_{spec} einer heizbaren Beschichtung durch die Formel P_{spec} = U²/(R_{□}•D²) beschrieben werden, worin U die Speisespannung, R_{□} den elektrischen Flächenwiderstand der Beschichtung und D den Abstand zwischen den beiden Sammelleitungen darstellen. Der Flächenwiderstand R_{□} der Beschichtung liegt bei den derzeit in der industriellen Serienfertigung eingesetzten Materialien in der Größenordnung von einigen Ohm pro Flächeneinheit (Ω/□).

Um mit der in Kraftfahrzeugen standardmäßig zur Verfügung stehenden Bordspannung von 12 bis 24 V eine für den gewünschten Zweck zufriedenstellende Heizleistung zu erzielen, sollten die Sammelleitungen einen möglichst geringen Abstand D voneinander haben. In Anbetracht der Tatsache, dass der Widerstand R der heizbaren Beschichtung mit der Länge des Strompfads zunimmt und da die Fahrzeugscheiben in der Regel breiter als hoch sind, sind die Sammelleitung normalerweise entlang des oberen und unteren Scheibenrands angeordnet, so dass der Heizstrom über den kürzeren Weg der Scheibenhöhe fließen kann.

Nun schirmen Scheiben mit einer elektrischen Heizschicht elektromagnetische Strahlung relativ stark ab, so dass insbesondere in Kraftfahrzeugen mit einer heizbaren Windschutzscheibe der Funkdatenverkehr erheblich beeinträchtigt sein kann. Heizbare Windschutzscheiben werden deshalb häufig mit beschichtungsfreien Zonen ("Kommunikations- oder Sensorfenster") versehen, die zumindest für bestimmte Bereiche des elektromagnetischen Spektrums gut durchlässig sind, um auf diese Weise einen reibungslosen Datenverkehr zu ermöglichen. Die beschichtungsfreien Zonen, an denen sich häufig elektronische Einrichtungen, wie Sensoren und dergleichen befinden, sind gewöhnlich in der Nähe des oberen Scheibenrands angeordnet, wo sie vom oberen Maskierungsstreifen gut verdeckt werden können.

Jedoch beeinträchtigen beschichtungsfreie Zonen die elektrischen Eigenschaften der Heizschicht, was sich zumindest lokal auf die Stromdichteverteilung des durch die Heizschicht fließenden Heizstroms auswirkt. Tatsächlich verursachen sie eine stark inhomogene Heizleistungsverteilung, bei der die Heizleistung unterhalb und in der Umgebung der beschichtungsfreien Zonen deutlich verringert ist. Andererseits treten Stellen mit einer besonders hohen Stromdichte auf ("Hot Spots"), in denen die Heizleistung stark erhöht ist. In der Folge können sehr hohe lokale Scheibentemperaturen auftreten, die eine Gefahr für Verbrennungen darstellen und den Scheiben große thermische Spannungen auferlegen. Zudem können sich dadurch Klebstellen von Anbauteilen lösen.

Die Fachwelt hat versucht, diese Probleme durch die Formgebung des Heizfelds und/oder der Sammelleitungen und/oder den Einbau einer dritten Sammelleitung zu beheben.

So ist beispielsweise aus der britischen Patentanmeldung GB 2381179 A eine heizbare Windschutzscheibe bekannt, deren Heizschicht in mindestens zwei Felder oder Zonen aufgeteilt ist, die durch unbeschichtete Bereiche voneinander getrennt sind. Das beschichtungsfreie Kommunikationsfenster befindet sich in der zentralen Zone der Beschichtung. Die im eingebauten Zustand obere Sammelleitung wird um drei Ränder (horizontaler unterer Rand und zwei parallel zueinander verlaufende vertikale Seitenränder) des Kommunikationsfensters geführt. Die längs der beiden Seitenränder verlaufenden Teilstrecken der Sammelleitung werden durch die beiden unbeschichteten Bereiche, die die zentrale Zone von den beiden seitlich davon liegenden Zonen trennen, geführt.

Aus der internationalen Patentanmeldung WO 2011/006743 A1 ist eine heizbare Windschutzscheibe bekannt, die auf einem transparenten Substrat eine elektrisch leitfähige Beschichtung, zwei elektrische Sammelbänder, mindestens einen örtlich begrenzten, von der Beschichtung abgegrenzten Bereich und innerhalb dieses Bereichs einen beschichtungsfreien Bereich als Kommunikationsfenster aufweist. Der abgegrenzte Bereich ist durch mindestens zwei parallel zu Äquipotenziallinien verlaufende, über mindestens einen ohmschen Widerstand verbundene Stromsammelbereiche auf der Beschichtung und mindestens zwei parallel zu elektrischen Feldlinien verlaufende, elektrisch isolierende Trennlinien zumindest teilweise begrenzt.

Aus der europäischen Patentanmeldung EP 2 334 141 A1 ist ebenfalls eine beschichtete Scheibe mit einem heizbaren Kommunikationsfenster bekannt. In dem beschichtungsfreien Bereich des Kommunikationsfensters ist mindestens ein Heizleiter mit zwei Polen aufgebracht, wobei der erste Pol mit der elektrisch leitfähigen transparenten Beschichtung elektrisch verbunden ist und der zweite Pol mit der besagten Beschichtung oder einem Stromsammelband elektrisch verbunden ist.

Aus den internationalen Patentanmeldungen WO 2012/031907 A1 und WO 2012/031908 A1 ist ebenfalls eine transparente Scheibe mit einer elektrisch heizbaren Beschichtung bekannt, die mit mindestens zwei zum elektrischen Verbindungen mit den beiden Polen einer Spannungsquelle vorgesehenen ersten Elektroden elektrisch verbunden ist, so dass durch Anlegen einer Speisespannung ein Heizstrom über ein zwischen den beiden ersten Elektroden gebildetes Heizfeld fließt. Dabei weist das Heizfeld mindestens eine beschichtungsfreie Zone als Kommunikationsfenster auf, die von einem zumindest abschnittsweise von der heizbaren Beschichtung gebildeten Zonenrand begrenzt wird. Die Scheibe weist des Weiteren eine zweite Elektrode auf, die zum Verbinden mit dem einen Pol der Spannungsquelle vorgesehen ist. Diese zweite Elektrode verfügt über wenigstens einen zumindest abschnittsweise in der beschichtungsfreien Zone angeordneten Zuleitungsabschnitt und einen oder mehrere mit dem Zuleitungsabschnitt verbundene Anschlussabschnitte. Dabei erstrecken sich die Anschlussabschnitte jeweils ausgehend von der beschichtungsfreien Zone über einen Randabschnitt des Zonenrand hinweg. Der Randabschnitt wird von einem Abschnitt des Heizfelds gebildet, der sich zwischen der beschichtungsfreien Zone und der zur Verbindung mit dem anderen Pol der Spannungsquelle vorgesehenen ersten Elektrode befindet.

In einer Ausführungsform besteht der Zuleitungsabschnitt aus mindestens zwei voneinander getrennten Zuleitungsteilen, die jeweils einen Kopplungsadapter aufweisen, der mit der heizbaren Beschichtung elektrisch verbunden ist. Dabei sind die beiden Kopplungsabschnitte so angeordnet, dass sie durch die heizbare Beschichtung galvanisch gekoppelt sind.

Des Weiteren ist aus dem europäischen Patent EP 1 183 912 B1 eine transparente, heizbare Scheibe bekannt, die zusätzlich zu der oberen und der unteren Sammelleitung in wenigstens einem Bereich des Umfangs des Kommunikationsfensters eine dritte Sammelleitung oder Busbar aufweist, die einen elektrischen Widerstand <0,35 Ohm pro Flächeneinheit (Ω/□) hat.

Nicht zuletzt ist aus der internationalen Patentanmeldung WO 2010/136400 eine transparente, heizbare Scheibe bekannt, die mindestens ein transparentes, elektrisch isolierende Substrat, mindestens eine großflächige, elektrisch leitfähige, transparente Beschichtung, die mit zwei elektrischen Sammelschienen oder Sammelleitern zur Übertragung elektrischer Leistung verbunden ist, mindestens ein Kommunikationsfenster sowie eine dritte Sammelleitung oder Busbar umfasst.

Weiterer Stand der Technik kann US 5414240 A und DE 4316575 C1 entnommen werden.

Diese bekannten Konfigurationen heizbarer Scheiben haben bereits einen beträchtlichen Fortschritt mit sich gebracht. Indes können die bekannten Konfigurationen die vorstehend geschilderten Probleme der lokalen Überhitzung nicht bei heizbaren Scheiben zur Zufriedenheit lösen, die ein besonders großes Kommunikationsfenster und/oder ein geometrisch besonders anspruchsvolles Design der schwarzen Randbeschichtung oder Maskierung aufweisen.

Indes nimmt die Anzahl von Kameras, Sensoren und Antennen hinter der Windschutzscheibe von Automobilen stetig zu. Für viele dieser Geräte muss die transparente, elektrisch leitfähige Beschichtung lokal entfernt werden. Diese Kommunikationsfenster werden somit ständig größer und ihre Ränder können nicht mehr in Gänze von der schwarzen Maskierung, die entweder im Volldruck und/oder als Punktraster appliziert wird, bedeckt werden. Dadurch wird der drittes Sammelleiter oder die dritte Busbar zumindest teilweise von innen und von außen sichtbar. Somit werden an den dritten Sammelleiter neben den elektrischen Anforderungen zusätzliche Anforderungen gestellt, insbesondere hinsichtlich der Farbe. Hier werden vom OEM (Original Equipment Manufacturing) meist dunkle Farben für die Busbars bevorzugt. Helle, silberfarbige Aspekte sind dagegen weniger bevorzugt. Indes geht eine dunkle Farbe einher mit einer Reduktion des Silberanteils in der Paste und damit mit einer Reduktion der elektrischen Leitfähigkeit, so dass die dunklen Silberpasten nicht für den oberen oder unteren Sammelleiter geeignet sind.

Demgegenüber besteht die Aufgabe der vorliegenden Erfindung darin, die bekannten gattungsgemäßen Scheiben so weiterzubilden, dass die transparenten Scheiben über ihre gesamte Heizschicht hinweg mit einer zumindest annähernd gleichmäßigen Heizleistungsverteilung heizbar sind und keine durch neue, geometrisch besonders anspruchsvolle Designs der schwarzen Randbeschichtung und/oder durch besonders große Kommunikationsfenster hervorgerufene Hot Spots mehr aufweisen. Außerdem sollen die transparenten Scheiben, die zumindest teilweise sichtbare, durch die Maskierung nicht abgedeckte Kommunikationsfenster und dritte Sammelleitungen aufweisen, die Verwendung von dunklen Silberpasten gestatten.

Diese und weitere Aufgaben werden nach dem Vorschlag der Erfindung durch eine transparente Scheibe mit den Merkmalen des unabhängigen Patentanspruchs gelöst. Vorteilhafte Ausgestaltungen der Erfindung sind durch die Merkmale der Unteransprüche angegeben.

In einer vorteilhaften Ausgestaltung der erfindungsgemäßen Scheibe ist die Oberfläche der ersten Scheibe, auf der die elektrisch heizbare Beschichtung angeordnet ist, über eine thermoplastische Zwischenschicht mit einer zweiten Scheibe flächig verbunden ist

Als erste und gegebenenfalls zweite Scheibe sind im Grunde alle elektrisch isolierenden Substrate geeignet, die unter den Bedingungen der Herstellung und der Verwendung der erfindungsgemäßen Scheibe thermisch und chemisch stabil sowie dimensionsstabil sind.

Die erste Scheibe und/oder die zweite Scheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die erste Scheibe und/oder die zweite Scheibe sind bevorzugt transparent, insbesondere für die Verwendung der Scheibe als Windschutzscheibe oder Rückscheibe eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich >70 % aufweist. Für Scheiben, die nicht im verkehrsrelevanten Sichtfeld des Fahrers liegen, beispielsweise für Dachscheiben, kann die Transmission aber auch viel geringer sein, beispielsweise >5 %.

Die Dicke der erfindungsgemäßen Scheibe kann breit variieren und so hervorragend den Erfordernissen des Einzelfalls angepasst werden. Vorzugsweise werden Scheiben mit den Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Scheibe kann breit variieren und richtet sich nach der Größe der erfindungsgemäßen Verwendung. Die erste Scheibe und gegebenenfalls die zweite Scheibe weisen beispielsweise im Fahrzeugbau und Architekturbereich übliche Flächen von 200 cm² bis zu 20 m² auf.

Die erfindungsgemäße Scheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Substrate planar oder leicht oder stark in einer Richtung oder in mehreren Richtungen des Raumes gebogen. Insbesondere werden planare Substrate verwendet. Die Scheiben können farblos oder gefärbt sein.

Mehrere Scheiben werden durch mindestens eine Zwischenschicht miteinander verbunden. Die Zwischenschicht enthält vorzugsweise mindestens einen thermoplastischen Kunststoff, bevorzugt Polyvinylbutyral (PVB), Ethylenvinylacetat (EVA) und/oder Polyethylenterephthalat (PET). Die thermoplastische Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, fluorierte Ethylen-Propylen-Copolymerisate, Polyvinylfluorid und/oder Ethylen-Tetrafluorethylen-Copolymerisate, oder Copolymere oder Gemische davon enthalten. Die thermoplastische Zwischenschicht kann durch eine oder auch durch mehrere übereinander angeordnete thermoplastische Folien ausgebildet werden, wobei die Dicke einer thermoplastischen Folie bevorzugt von 0,25 mm bis 1 mm beträgt, typischerweise 0,38 mm oder 0,76 mm.

Bei einer erfindungsgemäßen Verbundscheibe aus einer ersten Scheibe, einer Zwischenschicht und einer zweiten Scheibe kann die elektrisch heizbare Beschichtung direkt auf der ersten Scheiben aufgebracht sein oder auf eine Trägerfolie oder auf die Zwischenschicht selbst aufgebracht sein. Die erste Scheibe und die zweite Scheibe weisen jeweils eine innenseitige Oberfläche und eine außenseitige Oberfläche auf. Die innenseitigen Oberflächen der ersten und der zweiten Scheibe sind einander zugewandt und über die thermoplastische Zwischenschicht miteinander verbunden. Die außenseitigen Oberflächen der ersten und der zweiten Scheibe sind voneinander und von der thermoplastischen Zwischenschicht abgewandt. Die elektrisch leitfähige Beschichtung ist auf der innenseitigen Oberfläche der ersten Scheibe aufgebracht. Natürlich kann auch auf der innenseitigen Oberfläche der zweiten Scheibe eine weitere elektrisch leitfähige Beschichtung aufgebracht sein. Auch die außenseitigen Oberflächen der Scheiben können Beschichtungen aufweisen. Die Begriffe "erste Scheibe" und "zweite Scheibe" sind zur Unterscheidung der beiden Scheiben bei einer erfindungsgemäßen Verbundscheibe gewählt. Mit den Begriffen ist keine Aussage über die geometrische Anordnung verbunden. Ist die erfindungsgemäße Scheibe beispielsweise dafür vorgesehen, in einer Öffnung, beispielsweise eines Fahrzeugs oder eines Gebäudes, den Innenraum gegenüber der äußeren Umgebung abzutrennen, so kann die ersten Scheibe dem Innenraum oder der äußeren Umgebung zugewandt sein.

Die erfindungsgemäße transparente Scheibe umfasst eine elektrisch leitfähige, heizbare, transparente Beschichtung, die sich zumindest über einen wesentlichen Teil der Scheibenfläche, insbesondere über deren Sichtfeld, erstreckt. Die elektrisch leitfähige Beschichtung ist mit mindestens zwei, insbesondere zwei, zum elektrischen Verbinden mit den beiden Polen einer Spannungsquelle vorgesehenen Sammelleitungen elektrisch so verbunden, dass durch Anlegen einer Speisespannung ein Heizstrom über ein zwischen den beiden Sammelleitungen geformtes Heizfeld fließt. Typischerweise sind die beiden Sammelleitungen jeweils in Form einer streifen- oder bandförmigen Elektrode oder Sammelschiene oder Busbar zum Einleiten und breiten Verteilen des Stroms in der leitfähigen Beschichtung ausgebildet. Zu diesem Zweck sind sie mit der Heizschicht galvanisch verbunden.

Mindestens eine, insbesondere eine, der beiden Sammelleitungen, bevorzugt die im eingebauten Zustand der transparenten Scheibe obere Sammelleitung, kann in mindestens zwei, insbesondere zwei, voneinander getrennte Teilbereiche untergliedert sein. Es ist aber erfindungsgemäß bevorzugt, wenn die beiden Sammelleitungen durchgehend, d.h. nicht in zwei voneinander getrennten Teilbereichen gegliedert, ausgeführt sind

In einer vorteilhaften Ausgestaltung ist die Sammelleitung als eine durch Siebdruck aufgedruckte und danach eingebrannte leitfähige Struktur ausgebildet. Die aufgedruckte Sammelleitung enthält bevorzugt zumindest ein Metall, eine Metallegierung, eine Metallverbindung und/oder Kohlenstoff, besonders bevorzugt ein Edelmetall und insbesondere Silber. Die Druckpaste zur Herstellung der Sammelleitung enthält bevorzugt Metallpartikel und/oder Kohlenstoff und insbesondere Edelmetallpartikel wie Silberpartikel. Die elektrische Leitfähigkeit wird bevorzugt durch die elektrisch leitenden Partikel erzielt. Die Partikel können sich in einer organischen und/oder anorganischen Matrix wie Pasten oder Tinten befinden, bevorzugt als Druckpaste mit Glasfritten.

Die Schichtdicke der aufgedruckten Sammelleitung beträgt bevorzugt von 5 µm bis 40 µm, besonders bevorzugt von 8 µm bis 20 µm und ganz besonders bevorzugt von 8 µm bis 12 µm. Aufgedruckte Sammelleitungen mit diesen Dicken sind technisch einfach zu realisieren und weisen eine vorteilhafte Stromtragfähigkeit auf.

Der spezifische Widerstand ρₐ der Sammelleitungen beträgt bevorzugt von 0.8 µOhm•cm bis 7.0 µOhm•cm und besonders bevorzugt von 1.0 µOhm•cm bis 2.5 µOhm•cm. Sammelleitungen mit spezifischen Widerständen in diesem Bereich sind technisch einfach zu realisieren und weisen eine vorteilhafte Stromtragfähigkeit auf.

Aufgrund der elektrischen Anforderungen werden helle, silberfarbige Sammelleitungen mit hohem Silbergehalt verwendet. Zu ihrer Herstellung wird eine Siebdruckpaste mit einem hohen Silberanteil verwendet, wobei der Silbergehalt bei 70 bis 90 Gew.-%, vorzugsweise bei 75 bis 85 Gew.-%, jeweils bezogen auf die Gesamtmenge der Silberpaste, liegt.

Alternativ kann die Sammelleitung aber auch als ein Streifen oder im Falle einer in Teilbereiche untergliederten Sammelleitung als mindestens zwei, insbesondere zwei, Streifen einer elektrisch leitfähigen Folie ausgebildet sein. Die Sammelleitung enthält dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 µm bis 500 µm, besonders bevorzugt von 30 µm bis 300 µm. Sammelleitungen aus elektrisch leitfähigen Folien mit diesen Dicken sind technisch einfach zu realisieren und weisen eine vorteilhafte Stromtragfähigkeit auf. Der Streifen kann mit der elektrisch leitfähigen Struktur beispielsweise über eine Lötmasse, über einen elektrisch leitfähigen Kleber oder durch direktes Auflegen elektrisch leitend verbunden sein.

Die elektrisch leitfähige Beschichtung der erfindungsgemäßen Scheibe lässt sich in ein Heizfeld, d.h. den heizbaren Teil der elektrisch leitfähigen Beschichtung, der sich zwischen den beiden Sammelleitungen befindet, so dass ein Heizstrom eingeleitet werden kann, und einen Bereich außerhalb des erwähnten Heizfelds unterteilen.

Elektrisch heizbare Beschichtungen sind beispielsweise aus DE 20 2008 017 611 U1, EP 0 847 965 B1 oder WO2012/052315 A1 bekannt. Sie enthalten typischerweise eine funktionelle Schicht oder mehrere, beispielsweise zwei, drei oder vier elektrisch leitfähige, funktionelle Schichten. Die funktionellen Schichten enthalten bevorzugt zumindest ein Metall, beispielsweise Silber, Gold, Kupfer, Nickel und oder Chrom, oder eine Metallegierung. Die funktionellen Schichten enthalten besonders bevorzugt mindestens 90 Gew.-% des Metalls, insbesondere mindestens 99,9 Gew.-% des Metalls. Die funktionellen Schichten können aus dem Metall oder der Metallegierung bestehen. Die funktionellen Schichten enthalten besonders bevorzugt Silber oder eine silberhaltige Legierung. Solche funktionelle Schichten weisen eine besonders vorteilhafte elektrische Leitfähigkeit bei gleichzeitiger hoher Transmission im sichtbaren Spektralbereich auf. Die Dicke einer funktionellen Schicht beträgt bevorzugt von 5 nm bis 50 nm, besonders bevorzugt von 8 nm bis 25 nm. In diesem Bereich für die Dicke der funktionellen Schicht wird eine vorteilhaft hohe Transmission im sichtbaren Spektralbereich und eine besonders vorteilhafte elektrische Leitfähigkeit erreicht.

Typischerweise ist jeweils zwischen zwei benachbarten funktionellen Schichten der elektrisch leitfähigen Beschichtung zumindest eine dielektrische Schicht angeordnet. Bevorzugt ist unterhalb der ersten und/oder oberhalb der letzten funktionellen Schicht eine weitere dielektrische Schicht angeordnet. Eine dielektrische Schicht enthält zumindest eine Einzelschicht aus einem dielektrischen Material, beispielsweise ein Nitrid wie Siliziumnitrid oder ein Oxid wie Aluminiumoxid. Die dielektrische Schicht kann aber auch mehrere Einzelschichten umfassen, beispielsweise Einzelschichten eines dielektrischen Materials, Glättungsschichten, Anpassungsschichten, Blockerschichten und/oder Antireflexionsschichten. Die Dicke einer dielektrischen Schicht beträgt beispielsweise von 10 nm bis 200 nm.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt werden.

Weitere geeignete elektrisch leitfähige Beschichtungen enthalten bevorzugt Indium-Zinnoxid (ITO), fluordotiertes Zinnoxid (SnO₂:F) oder aluminiumdotiertes Zinkoxid (ZnO:Al).

Die elektrisch leitfähige Beschichtung kann prinzipiell jede Beschichtung sein, die elektrisch kontaktiert werden soll. Soll die erfindungsgemäße Scheibe die Durchsicht ermöglichen, wie es beispielsweise bei Scheiben im Fensterbereich der Fall ist, so ist die elektrisch leitfähige Beschichtung bevorzugt transparent. Die elektrisch leitfähige Beschichtung ist bevorzugt für elektromagnetische Strahlung transparent, besonders bevorzugt für elektromagnetische Strahlung einer Wellenlänge von 300 bis 1300 nm und insbesondere für sichtbares Licht.

In einer vorteilhaften Ausgestaltung ist die elektrisch leitfähige Beschichtung eine Schicht oder ein Schichtaufbau mehrerer Einzelschichten mit einer Gesamtstärke von kleiner oder gleich 2 µm, besonders bevorzugt kleiner oder gleich 1 µm.

Eine vorteilhafte elektrisch leitfähige Beschichtung weist einen Flächenwiderstand von 0,4 Ω/□ bis 10 Ω/□ auf. In einer besonders bevorzugten Ausgestaltung weist die erfindungsgemäße elektrisch leitfähige Beschichtung einen Flächenwiderstand von 0,5 Ω/□ bis 1 Ω/□ auf. Beschichtungen mit derartigen Flächenwiderständen eignen sich besonders zur Beheizung von Fahrzeugscheiben bei typischen Bordspannungen von 12 V bis 48 Volt oder bei Elektrofahrzeugen mit typischen Bordspannungen von bis zu 500 V.

Die elektrisch leitfähige Beschichtung kann sich über die gesamte Oberfläche der ersten Scheibe erstrecken. Die elektrisch leitfähige Beschichtung kann sich alternativ aber auch nur über einen Teil der Oberfläche der ersten Scheibe erstrecken. Die elektrisch leitfähige Beschichtung erstreckt sich bevorzugt über mindestens 50%, besonders bevorzugt über mindestens 70% und ganz besonders bevorzugt über mindestens 90% der innenseitigen Oberfläche der ersten Scheibe.

In einer vorteilhaften Ausgestaltung einer erfindungsgemäßen transparenten Scheibe als Verbundscheibe weist die innenseitige Oberfläche der ersten Scheibe einen umlaufenden Randbereich mit einer Breite von 2 mm bis 50 mm, bevorzugt von 5 mm bis 20 mm auf, der nicht mit der elektrisch leitfähigen Beschichtung versehen ist. Die elektrisch leitfähige Beschichtung weist dann keinen Kontakt zur Atmosphäre auf und ist im Inneren der Scheibe durch die thermoplastische Zwischenschicht vorteilhaft vor Beschädigungen und Korrosion geschützt.

In der erfindungsgemäßen transparenten Scheibe enthält das Heizfeld zumindest eine beschichtungsfreie Zone, in der keine elektrisch leitfähige Beschichtung vorhanden ist. Die beschichtungsfreie Zone wird von einem zumindest abschnittsweise von der elektrisch leitfähigen Beschichtung gebildeten Zonenrand begrenzt.

Insbesondere verfügt die beschichtungsfreie Zone über einen umlaufenden Zonenrand, der vollständig von der elektrisch leitfähigen Beschichtung gebildet wird.

Indes kann der Zonenrand in den umlaufenden Beschichtungsrand der elektrisch leitfähigen Beschichtung übergehen, so dass die beschichtungsfreie Zone direkt mit dem die Scheibenränder umlaufenden, beschichtungsfreien Randstreifen der erfindungsgemäßen transparenten Scheibe verbunden ist.

Die beschichtungsfreie Zone kann die unterschiedlichsten Umrisse aufweisen. So kann der Umriss quadratisch, rechteckig, trapezförmig, dreieckig, fünfeckig, sechseckig, siebeneckig oder achteckig gegebenenfalls mit abgerundeten Ecken und/oder gebogenen Kanten sowie kreisförmig, oval, tropfenförmig oder elliptisch sein. Die Umrisslinien können einen geradlinigen, wellenförmigen, zickzackförmigen und/oder sägezahnförmigen Verlauf haben. Mehrere dieser geometrischen Merkmale können bei ein und derselben beschichtungsfreien Zone verwirklicht sein.

Insbesondere dient die beschichtungsfreie Zone als Kommunikationsfenster, das für elektromagnetische Strahlung, insbesondere IR-Strahlung, Radarstrahlung und/oder Funkstrahlung, durchlässig ist. Außerdem können in dem Kommunikationsfenster auch Sensoren, beispielsweise Regensensoren, platziert werden.

Die beschichtungsfreie Zone kann beispielsweise durch Maskierung beim Aufbringen der Heizschicht auf ein Substrat oder durch Entfernen der Heizschicht beispielsweise durch mechanischen und/oder chemischen Abtrag und/oder durch Abtrag durch Bestrahlung mit elektromagnetischer Strahlung, insbesondere Laserlichtbestrahlung, nach dem Aufbringen der elektrisch heizbaren Beschichtung hergestellt werden.

Bei einer bevorzugten Ausführungsform ist mindestens eine, insbesondere eine, zweite beschichtungsfreie Zone vorhanden.

Vorzugsweise ist diese mindestens eine zweite beschichtungsfreie Zone im eingebauten Zustand der erfindungsgemäßen transparenten Scheibe oberhalb der mindestens einen ersten beschichtungsfreien Zone angeordnet.

Vorzugsweise weist die mindestens eine zweite beschichtungsfreie Zone die vorstehend beschriebenen Umrisse und Umrisslinien auf.

Vorzugsweise hat die mindestens eine zweite beschichtungsfreie Zone eine kleinere Fläche als die mindestens eine erste beschichtungsfreie Zone.

Bevorzugt ist die mindestens eine zweite beschichtungsfreie Zone im eingebauten Zustand der transparenten Scheibe in deren oberen Bereich angeordnet.

Nach dem Vorschlag der Erfindung zeichnet sich die erfindungsgemäße transparente Scheibe in wesentlicher Weise dadurch aus, dass sie zumindest eine, insbesondere eine, zum elektrischen Verbinden mit dem einen Pol der Spannungsquelle vorgesehene Zusatzelektrode, dritte Sammelleitung oder dritte Busbar aufweist, die zumindest abschnittsweise, insbesondere nur mit einem Elektrodenabschnitt, in der beschichtungsfreien Zone oder bevorzugt in und/oder auf dem Heizfeld der elektrisch heizbaren Beschichtung angeordnet und mit der elektrisch leitfähigen Beschichtung elektrisch so verbunden ist, dass bei Anlegen einer Speisespannung ein Teil des Heizstroms über einen Heizfeldabschnitt des Heizfelds fließt, der sich zwischen der Zusatzelektrode oder der beschichtungsfreien Zone und der zur Verbindung mit dem anderen Pol der Spannungsquelle vorgesehenen Sammelleitung befindet.

Somit ist die mindestens eine Zusatzelektrode oder dritte Busbar nur über das Heizfeld der elektrisch leitfähigen Beschichtung mit den Sammelleitungen elektrisch verbunden.

Vorzugsweise umgibt die mindestens eine Zusatzelektrode die mindestens eine beschichtungsfreie Zone vollständig oder abschnittsweise.

Mindestens eine der Zusatzelektroden oder die eine Zusatzelektrode kann in mindestens zwei, insbesondere zwei, voneinander getrennte Teilbereiche untergliedert sein. Erfindungsgemäß ist es indes bevorzugt, wenn die mindestens eine Zusatzelektrode oder die eine Zusatzelektrode durchgehend, d.h., nicht in Teilbereiche gegliedert, ausgeführt wird.

Vorzugsweise erstreckt sich die mindestens eine Zusatzelektrode oder erstrecken sich die mindestens zwei voneinander getrennten Teilbereiche der Zusatzelektrode längs des Zonenrands der mindestens einen beschichtungsfreien Zone. "Längs" bedeutet, dass die Zusatzelektrode oder ihre voneinander getrennten Teilbereiche nahezu parallel oder exakt parallel zu dem unteren Zonenrand verlaufen.

Ist die Zusatzelektrode oder ihre mindestens zwei voneinander getrennten Teilbereiche in der beschichtungsfreien Zone derart angeordnet, dass die Fläche zwischen dem Zonenrand des Heizfelds und der Zusatzelektrode oder ihrer Teilbereiche noch beschichtungsfrei ist, wird die elektrische Verbindung der Zusatzelektrode mit dem Heizfeldabschnitt mithilfe von mindestens zwei, vorzugsweise von mindestens drei, bevorzugt von mindestens vier und insbesondere von mindestens fünf Anschlussabschnitten bewerkstelligt. Ist die Zusatzelektrode in mindestens zwei, insbesondere zwei, voneinander getrennte Teilbereiche untergliedert, verfügt mindestens ein Teilbereich oder verfügen insbesondere alle Teilbereiche über mindestens zwei, vorzugsweise mindestens drei, bevorzugt mindestens vier und insbesondere mindestens fünf Anschlussabschnitte.

Die Anschlussabschnitte können die Form gerader oder Biegungen aufweisender Streifen haben, deren Länge größer als ihre Breite ist.

Die Anschlussabschnitte können aber auch von Ausbuchtungen und/oder Vorsprüngen der Zusatzelektrode oder ihrer Teilbereiche gebildet werden, wenn diese beispielsweise wellenförmig, zickzackförmig, sägezahnförmig oder mäanderförmig verläuft oder verlaufen, so dass sie das Heizfeld abschnittsweise berühren.

Die Anschlussabschnitte erstrecken sich von der Zusatzelektrode oder ihren voneinander getrennten Teilbereichen in den Heizfeldabschnitt des Heizfelds zwischen der Zusatzelektrode oder ihren Teilbereichen und der entgegengesetzt elektrisch geladenen Sammelleitung, insbesondere der im eingebauten Zustand der erfindungsgemäßen transparenten Scheibe unteren Sammelleitung.

Vorzugsweise erfolgt die elektrische Verbindung der Zusatzelektrode mit den beiden Polen der Spannungsquelle über das Heizfeld und über die beiden Sammelleitungen, insbesondere über die im eingebauten Zustand der erfindungsgemäßen Scheibe obere und untere Sammelleitung

Genauer gesagt, wird einerseits durch die Länge der Zusatzelektrode oder ihrer Teilbereiche das elektrische Potenzial, insbesondere an der Verbindungsstelle zum Heizfeld so eingestellt, dass möglichst viel Strom über die Zusatzelektrode oder ihre Teilbereiche fließt. Andererseits darf nur so viel Strom fließen, dass die Zusatzelektrode oder ihre Teilbereiche und deren direkte Umgebung nicht überhitzten, um die Bildung von Hot Spots zu vermeiden. So kann das elektrische Potenzial bzw. der elektrische Widerstand der Zusatzelektrode über ihre Breite entsprechend angepasst werden.

Vorzugsweise ist die Zusatzelektrode 0,5 bis 2 µm und bevorzugt 0,5 bis 1 µm dick und 1 bis 5 µm und bevorzugt 1 bis 3 µm breit. Ihre Länge richtet sich in erster Linie nach dem Umfang der zugeordneten beschichtungsfreien Zone.

Insgesamt wird durch die erfindungsgemäße Anordnung von Sammelleitung und Zusatzelektrode eine annähernd homogene Verteilung der Heizleistung bewirkt und die Bildung von Stellen mit verringerter oder erhöhter Heizleistung (Hot Spots) wirksam verhindert.

Da Teilbereiche der Zusatzelektrode auch im Bereich der beschichtungsfreien Zone der erfindungsgemäßen transparenten Scheibe verlaufen können, kann die Bildung von Rückständen aus Eis und/oder kondensiertem Wasser in unmittelbarer Nähe dieser Teilbereiche verringert werden.

Erfindungsgemäß werden die Sammelleitungen mithilfe einer hellen Silberpaste hergestellt, die einen Silbergehalt von 70 bis 90 Gew.-%, insbesondere 75 bis 85 Gew.-%, jeweils bezogen auf die Gesamtmenge des Silberpaste, hat. Solche hellen Silberpasten erfüllen in vollem Umfang die von den OEM gestellten elektrischen Anforderungen.

Indes muss die zumindest abschnittsweise von innen und von außen sichtbare Zusatzelektrode nicht nur die an sie gestellten elektrischen Anforderungen erfüllen, sondern auch die von den OEM gestellten farblichen Anforderungen.

Erfindungsgemäß wird dies mithilfe einer durch Siebdruck aufgedruckten und danach eingebrannten dunklen Silberpaste, d.h. einer Silberpaste mit einem vergleichsweise geringen Silbergehalt bewerkstelligt, insbesondere mit einem Silbergehalt der signifikant geringer ist als der Silbergehalt der Silberpaste für die Sammelleitungen.

Der Silbergehalt der dunklen Silberpasten liegt bei 50 bis <70 Gew.-%, insbesondere 60 bis <70 Gew.-%, jeweils bezogen auf die Gesamtmenge der Silberpaste.

Erfindungsgemäß ist wegen des unterschiedlichen Silbergehalts die elektrische Leitfähigkeit der Zusatzelektrode geringer als die elektrische Leitfähigkeit der Sammelleitungen. Bevorzugt beträgt die elektrische Leitfähigkeit der Zusatzelektrode das 0,05- bis 0,3-fache, insbesondere 0,1- bis 0,2-fache, der elektrischen Leitfähigkeit der Sammelleitungen.

Die Sammelleitungen und/oder ihre Teilbereiche werden durch eine oder mehrere Zuleitungen elektrisch kontaktiert.

Die Zuleitung ist bevorzugt als flexibler Folienleiter oder Flachleiter oder Flachbandleiter ausgebildet. Darunter wird ein elektrischer Leiter verstanden, dessen Breite deutlich größer ist als seine Dicke. Ein solcher Flachleiter ist beispielsweise ein Streifen oder Band, enthaltend oder bestehend aus Kupfer, verzinntem Kupfer, Aluminium, Silber, Gold oder Legierungen davon. Der Flachleiter weist beispielsweise eine Breite von 2 mm bis 16 mm und eine Dicke von 0,03 mm bis 0,1 mm auf. Der Flachleiter kann eine isolierende, bevorzugt polymere Ummantelung, beispielsweise auf Polyimid-Basis aufweisen. Flachleiter, die sich zur Kontaktierung von elektrisch leitfähigen Beschichtungen in Scheiben eignen, weisen lediglich eine Gesamtdicke von beispielsweise 0,3 mm auf. Derart dünne Flachleiter können ohne Schwierigkeiten zwischen den einzelnen Scheiben in der thermoplastischen Zwischenschicht eingebettet werden. In einem Flachleiterband können sich mehrere voneinander elektrisch isolierte, leitfähige Schichten befinden.

Alternativ können auch dünne Metalldrähte als elektrische Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

Bei einer bevorzugten Ausführungsform der erfindungsgemäßen transparenten Scheibe ist jeder der mindestens zwei, insbesondere zwei, Sammelleitungen mit jeweils einem Flachleiter mit den Polen der Spannungsquelle elektrisch leitend verbunden.

Bei einer weiteren bevorzugten Ausführungsform sind die mindestens zwei, insbesondere zwei, Teilbereiche der mindestens einen, insbesondere einen, Sammelleitung mit jeweils einem an eine Spannungsquelle angeschlossenen Flachleiter elektrisch leitend verbunden. Vorzugsweise sind die Flachleiter in dem Bereich der Teilbereiche angeordnet, der der jeweils zugeordneten zweiten Seite des Scheibenrands nahe liegt.

In noch einer weiteren bevorzugten Ausführungsform sind die mindestens zwei, insbesondere zwei, Teilbereiche der mindestens einen, insbesondere einen Sammelleitung mit einem Flachleiter elektrisch leitend verbunden. Vorzugsweise ist bei dieser Ausführungsform der Flachleiter mittig zwischen den beiden einander gegenüberliegenden Enden der Teilbereiche angeordnet. Vorzugsweise wird dies durch ein gemeinsames elektrisch leitfähiges Verbindungsteil oder durch zwei, dem jeweiligen Teilbereich zugeordnete, elektrisch leitfähige Verbindungsteile bewerkstelligt. Der Flachleiter kann mit dem elektrisch leitfähigen Verbindungsteil durch einen flachen Metallstreifen, insbesondere Kupferstreifen, verbunden sein.

In diesem Falle wird die elektrische Isolierung zwischen dem Flachleiter und dem Verbindungsteil mittels einer elektrisch isolierenden Schicht, insbesondere mittels einer streifenförmigen, elektrisch isolierenden Schicht, zwischen dem Flachleiter und dem Verbindungsteil bewerkstelligt. Sie kann auch an die beiden einander gegenüberliegenden Endkanten der Teilbereiche anstoßen.

Ein wesentlicher Vorteil dieser Anordnung ist, dass nur noch ein Flachleiter zur Versorgung von zwei Teilbereichen einer Sammelleitung benötigt wird, was die Herstellung der erfindungsgemäßen transparenten Scheibe wesentlich vereinfacht.

In der erfindungsgemäßen transparenten Scheibe sind die Bereiche, in denen die Sammelleitungen und der oder die Flachleiter angeordnet ist oder sind, durch übliche und bekannte, opake oder undurchsichtige Maskierungsstreifen optisch maskiert. Vorzugsweise sind die Maskierungsstreifen schwarz gefärbt. Vorzugsweise werden die Vorprodukte der Maskierungsstreifen durch Siebdruck auf die noch unbeschichteten Scheiben aufgetragen, wonach die aufgetragenen Schichten eingebrannt werden.

Des Weiteren ist ein Teilbereich der mindestens einen ersten beschichtungsfreien Zone und die ihm zugeordnete mindestens einen Zusatzelektrode nicht von dem Markierungsstreifen bedeckt, sondern von innen und außen sichtbar

Die erfindungsgemäßen Scheiben können in üblicher und bekannter Weise hergestellt werden. Vorzugsweise werden sie mithilfe des erfindungsgemäßen Verfahrens hergestellt.

Das erfindungsgemäße Verfahren umfasst die folgenden Verfahrensschritte:
(A) Herstellen einer elektrisch leitfähigen Beschichtung
(B) Herstellen mindestens einer beschichtungsfreien Zone oder mindestens zweier, beschichtungsfreier Zonen in der elektrisch leitfähigen Beschichtung und im Heizfeld;
(C) Ausbilden von mindestens zwei, insbesondere zwei, mit den beiden Polen einer Spannungsquelle verbundenen Sammelleitungen, die mit der elektrisch leitfähigen Beschichtung elektrisch verbunden sind, so dass durch Anlegen einer Speisespannung ein Heizstrom über ein zwischen den beiden Sammelleitungen befindliches Heizfeld fließt, und/oder
(D) Herstellen mindestens einer zum elektrischen Verbinden über das Heizfeld mit den mindestens zwei Sammelleitungen vorgesehenen, die mindestens eine beschichtungsfreie Zone wenigstens abschnittsweise umgebenden Zusatzelektrode, wobei
(E) die Verfahrensschritte (C) und (D) vorzugsweise nacheinander oder gleichzeitig, insbesondere gleichzeitig, durchgeführt werden,
wobei die elektrische Leitfähigkeit der Sammelleitungen größer als die elektrische Leitfähigkeit der Zusatzelektroden ist.

Bei einer besonders bevorzugten Ausführungsform des erfindungsgemäßen Verfahrens werden die Verfahrensschritte C und D gleichzeitig durchgeführt. Vorzugsweise wird hierbei ein Siebdruckverfahren verwendet.

Erfindungsgemäße wird für den Verfahrensschritt C eine helle Silberpaste eines Silbergehalts von 70 bis 90 Gew.-%, insbesondere 75 bis 85 Gew.-%, jeweils bezogen auf die Gesamtmenge der hellen Silberpaste, verwendet.

Demgegenüber wird für den Verfahrensschritt D eine dunkle Silberpaste eines Silbergehalts von 50 bis <70 Gew.-%, insbesondere 60 bis <70 Gew.-%, jeweils bezogen auf die Gesamtmenge der dunklen Siebdruckpaste, verwendet.

Insbesondere werden die Verfahrensschritte C und D so ausgeführt, dass die elektrische Leitfähigkeit der resultierenden dunklen Zusatzelektroden das 0,05- bis 0,3-fache, insbesondere 0,1- bis 0,2-fache, der elektrischen Leitfähigkeit der Sammelleitungen beträgt.

Die Helligkeit einer Farbe wird üblicherweise im L*a*b*-Farbraum gemäß EN ISO 11664-4 (Bereich Farbmetrik, Titel Farbmetrik - Teil 4: CIE 1976 L*a*b* Farbenraum) angegeben, wobei L* die Helligkeit (Luminanz) einer Farbe mit Werten von 0 bis 100 angibt.

Ein weiterer Aspekt der Erfindung betrifft eine transparente Scheibe, wobei die mindestens zwei Sammelleitungen eine helle, silberne Farbe mit L* >65, bevorzugt >80, und die mindestens eine Zusatzelektrode eine dunkle Farbe mit L* <65, bevorzugt <50, aufweisen.

Im einzelnen kann das Aufbringen der elektrisch leitfähigen Beschichtung im Verfahrensschritt A durch an sich bekannte Verfahren erfolgen, bevorzugt durch magnetfeldunterstützte Kathodenzerstäubung. Das ist besonders vorteilhaft im Hinblick auf eine einfache, schnelle, kostengünstige und gleichmäßige Beschichtung der ersten Scheibe, wenn die erfindungsgemäße Scheibe als Verbundscheibe ausgestaltet ist. Die elektrisch leitfähige, heizbare Beschichtung kann aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Die erste Scheibe kann nach Verfahrensschritt A einer Temperaturbehandlung unterzogen werden. Dabei wird die erste Scheibe mit der elektrisch leitfähigen Beschichtung auf eine Temperatur von mindestens 200°C, bevorzugt mindestens 300°C erwärmt. Die Temperaturbehandlung kann der Erhöhung der Transmission und/oder der Verringerung des Flächenwiderstands der elektrisch leitfähigen Beschichtung dienen.

Die erste Scheibe kann nach Verfahrensschritt A gebogen werden, typischerweise bei einer Temperatur von 500 °C bis 700 °C. Da es technisch einfacher ist, eine plane Scheibe zu beschichten, ist dieses Vorgehen vorteilhaft, wenn die erste Scheibe gebogen werden soll. Alternativ kann die erste Scheibe aber auch vor Verfahrensschritt A gebogen werden, beispielsweise wenn die elektrisch leitfähige Beschichtung nicht dazu geeignet ist, einen Biegeprozess ohne Beschädigungen zu überstehen.

Das Aufbringen der Sammelleitungen im Verfahrensschritt C und der Zusatzelektrode im Verfahrensschritt D erfolgt bevorzugt durch Aufdrucken und Einbrennen der Silberpasten in einem Siebdruckverfahren. Alternativ können die Sammelleitungen und die Stromversorgungsleitungen als Streifen einer elektrisch leitfähigen Folie auf die elektrisch leitfähige Beschichtung aufgebracht, bevorzugt aufgelegt, angelötet oder angeklebt werden.

In einer besonders bevorzugten Ausführungsform des erfindungsgemäßen Verfahrens wird das Siebdruckverfahren in einem Fertigungsschritt CD ausgeführt. Dabei befinden sich die zwei unterschiedlichen Silberpasten im Sieb. Die räumliche Trennung im Sieb wird durch entsprechende Abtrennungen vorgenommen.

Bei Siebdruckverfahren erfolgt die laterale Formgebung durch die Maskierung des Gewebes, durch das die Druckpaste mit den Metallpartikeln gedrückt wird. Durch eine geeignete Formgebung der Maskierung kann beispielsweise die Breite der Sammelleitungen und der Zusatzelektroden besonders einfach vorgegeben und variiert werden.

Die beschichtungsfreien Zonen werden im Verfahrensschritte B bevorzugt durch mechanisches Abtragen der im Verfahrensschritt A hergestellten heizbaren Beschichtung hergestellt. Das mechanische Abtragen kann auch durch die Behandlung mit geeigneten Chemikalien und/oder durch die Bestrahlung mit elektromagnetischer Strahlung ersetzt oder ergänzt werden.

Eine vorteilhafte Weiterbildung des erfindungsgemäßen Verfahrens umfasst mindestens die folgenden weiteren Schritte:
- Anordnen einer thermoplastischen Zwischenschicht auf der beschichteten Oberfläche der ersten Scheibe und Anordnen einer zweiten Scheibe auf der thermoplastischen Zwischenschicht und
- Verbinden der ersten Scheibe und der zweiten Scheibe über die thermoplastische Zwischenschicht.

In diesen Verfahrensschritten wird die erste Scheibe so angeordnet, dass diejenige ihrer Oberflächen, welche mit der heizbaren Beschichtung versehen ist, der thermoplastischen Zwischenschicht zugewandt ist. Die Oberfläche wird dadurch zur innenseitigen Oberfläche der ersten Scheibe.

Die thermoplastische Zwischenschicht kann durch eine einzelne oder auch durch zwei oder mehrere thermoplastische Folien, die flächenmäßig übereinander angeordnet werden, ausgebildet werden.

Das Verbinden von erster und zweiter Scheibe erfolgt bevorzugt unter Einwirkung von Hitze, Vakuum und/oder Druck. Es können an sich bekannte Verfahren zur Herstellung einer Scheibe verwendet werden.

Es können beispielsweise sogenannte Autoklavverfahren bei einem erhöhten Druck von etwa 10 bar bis 15 bar und Temperaturen von 130°C bis 145°C über etwa 2 Stunden durchgeführt werden. An sich bekannte Vakuumsack- oder Vakuumringverfahren arbeiten beispielsweise bei etwa 200 mbar und 80°C bis 110°C. Die erste Scheibe, die thermoplastische Zwischenschicht und die zweite Scheibe können auch in einem Kalander zwischen mindestens einem Walzenpaar zu einer Scheibe gepresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40°C bis 150°C. Kombinationen von Kalander- und Autoklavverfahren haben sich in der Praxis besonders bewährt. Alternativ können Vakuumlaminatoren eingesetzt werden. Diese bestehen aus einer oder mehreren heizbaren und evakuierbaren Kammern, in denen die erste Scheibe und die zweite Scheibe innerhalb von beispielsweise etwa 60 Minuten bei verminderten Drücken von 0,01 mbar bis 800 mbar und Temperaturen von 80°C bis 170°C laminiert werden.

Die erfindungsgemäße transparente Scheibe, insbesondere die mithilfe des erfindungsgemäßen Verfahrens hergestellte erfindungsgemäße transparente Scheibe, kann hervorragend als funktionales und/oder dekoratives Einzelstück und/oder als Einbauteil in Möbeln, Geräten und Gebäuden sowie in Fortbewegungsmitteln zur Fortbewegung auf dem Lande, in der Luft oder zu Wasser, insbesondere in Kraftfahrzeugen, beispielsweise als Windschutzscheibe, Heckscheibe, Seitenscheibe und/oder Glasdach verwendet werden. Vorzugsweise ist die erfindungsgemäße transparente Scheibe als Fahrzeug-Windschutzscheibe oder Fahrzeug-Seitenscheibe ausgeführt.

Es versteht sich, dass die vorstehend genannten und nachstehend näher erläuterten Merkmale nicht nur in den angegebenen Kombinationen und Konfigurationen, sondern auch in anderen Kombinationen und Konfigurationen oder in Alleinstellung einsetzbar sind, ohne den Rahmen der vorliegenden Erfindung zu verlassen.

Die Erfindung wird nun anhand von Ausführungsbeispiele näher erläutert, wobei Bezug auf die beigefügten Figuren genommen wird. Es zeigen in vereinfachter, nicht in maßstäblicher Darstellung:
- Figur 1: eine Draufsicht auf eine beispielhafte Ausgestaltung der erfindungsgemäßen Windschutzscheibe;
- Figur 2: eine Darstellung eines vertikalen Schnitts durch einen Ausschnitt der erfindungsgemäßen Windschutzscheibe gemäß der Figur 1;
- Figur 3: eine perspektivische Schnittdarstellung eines Ausschnitts der Windschutzscheibe gemäß der Figur 1;
- Figur 4: eine Draufsicht auf eine zweite beispielhafte Ausgestaltung der erfindungsgemäßen Windschutzscheibe;
- Figur 5: eine Draufsicht auf noch eine dritte beispielhafte Ausgestaltung der erfindungsgemäßen Windschutzscheibe und
- Figur 6: eine Draufsicht auf eine vierte beispielhafte Ausgestaltung der erfindungsgemäßen Windschutzscheibe.

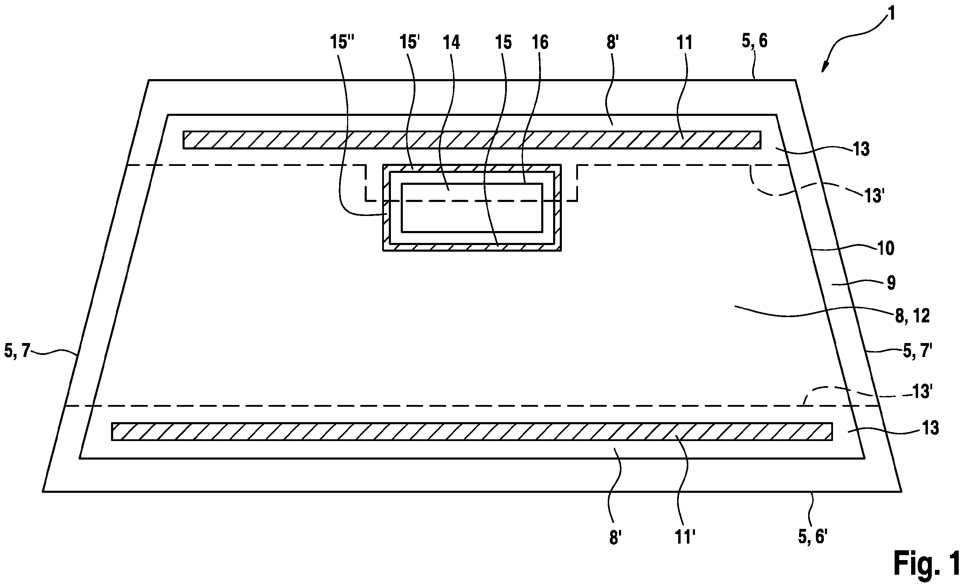

In den Figuren 1 bis 6 haben die Bezugszeichen die folgende Bedeutung:
- 1: Windschutzscheibe
- 2: Außenscheibe
- 3: Innenscheibe
- 4: Klebeschicht
- 5: Scheibenrand
- 6, 6': erste Seite
- 7, 7': zweite Seite
- 8: elektrisch leitfähige Beschichtung
- 8': Teilbereiche der elektrisch leitfähigen Beschichtung 8 außerhalb des Heizfelds 12
- 9: umlaufender beschichtungsfreier Randstreifen
- 10: Beschichtungsrand
- 11, 11': Sammelleitung
- 12: Heizfeld
- 13: Maskierungsstreifen
- 13': Rand des Maskierungsstreifens
- 14: erste beschichtungsfreie Zone
- 14': zweite beschichtungsfreie Zone
- 14": dritte beschichtungsfreie Zone
- 15, 15' 15": zumindest abschnittsweise die erste beschichtungsfreie Zone 14 umlaufende Zusatzelektrode
- 16: von der elektrisch leitfähigen Beschichtung 8 gebildeter Zonenrand der ersten beschichtungsfreien Zone 14

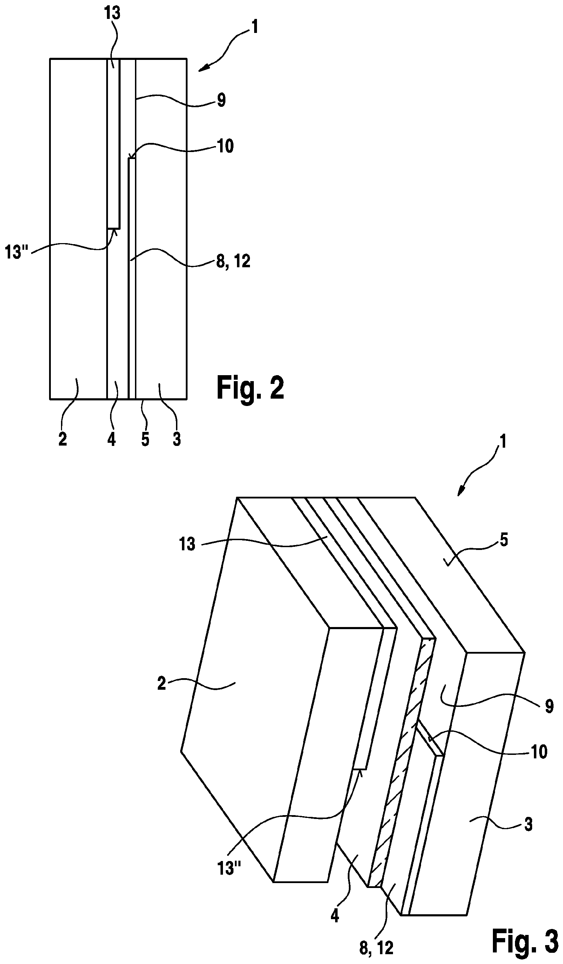

Die Figur 1 zeigt eine transparente Windschutzscheibe 1 eines Kraftfahrzeugs von der Innenseite her gesehen. Die Windschutzscheibe 1 ist hier beispielsweise als Verbundglasscheibe ausgeführt, deren Aufbau anhand der Darstellung eines vertikalen Schnitts durch einen Ausschnitt der Windschutzscheibe 1 in der Figur 2 und anhand der perspektivischen Schnittdarstellung eines Ausschnitts der Windschutzscheibe 1 in der Figur 3 veranschaulicht wird.

Demnach umfasst die Windschutzscheibe 1 zwei starre Einzelscheiben, nämlich eine Außenscheibe 2 und eine Innenscheibe 3, die durch eine thermoplastische Klebeschicht 4, hier beispielsweise eine Polyvinylbutyralfolie (PVB), eine Ethylen-Vinylacetat-Folie (EVA) oder eine Polyurethanfolie (PU), haftfest miteinander verbunden sind. Die beiden Einzelscheiben 2, 3 sind in etwa von gleicher Größe und Form und können beispielsweise eine trapezförmig geschwungene Kontur haben, was in den Figuren angedeutet wird. Sie sind beispielsweise aus Glas gefertigt, wobei sie auch aus einem nichtgläsernen Material wie Kunststoff aufgebaut sein können. Für andere Anwendungen als Windschutzscheiben wäre es auch möglich, die beiden Einzelscheiben 2, 3 aus einem flexiblen Material herzustellen. Die Kontur der Windschutzscheibe 1 ergibt sich durch einen den beiden Einzelscheiben 2, 3 gemeinsamen Scheibenrand 5, wobei die Windschutzscheibe 1 oben und unten über zwei einander gegenüber liegende erste Seiten 6, 6' sowie links und rechts über zwei einander gegenüberliegende zweite Seiten 7, 7' verfügt.

Wie in den Figuren 2 und 3 dargestellt, ist auf der mit der Klebeschicht 4 verbundenen Seite der Innenscheibe 3 eine transparente, elektrisch leitfähige Beschichtung 8 abgeschieden. Die heizbare, elektrisch leitfähige Beschichtung 8 ist hier beispielsweise im Wesentlichen vollflächig auf der Innenscheibe 3 aufgebracht, wobei ein allseitig umlaufender Randstreifen 9 nicht beschichtet ist, so dass ein Beschichtungsrand 10 der elektrisch leitfähigen Beschichtung 8 gegenüber dem Scheibenrand 5 nach innen rückversetzt ist. Hierdurch wird eine elektrische Isolierung der elektrisch leitfähigen Beschichtung 8 nach außen bewirkt. Zudem wird die elektrisch leitfähige Beschichtung 8 gegen die vom Scheibenrand 5 vordringende Korrosion geschützt.

Die elektrisch leitfähige Beschichtung 8 umfasst in bekannter Weise eine nicht dargestellte Schichtenfolge mit mindestens einer elektrisch heizbaren, metallischen Teilschicht, vorzugsweise Silber, und gegebenenfalls weiteren Teilschichten wie Entspiegelungs- und Blockerschichten. Vorteilhaft ist die Schichtenfolge thermisch hoch belastbar, so dass sie die zum Biegen der Glasscheiben erforderlichen Temperaturen von typischerweise mehr als 600 °C ohne Beschädigung übersteht, wobei aber auch thermisch gering belastbare Schichtenfolgen vorgesehen sein können. Die elektrisch leitfähige Beschichtung 8 kann gleichermaßen als metallische Einzelschicht aufgebracht sein. Ebenso ist denkbar, die elektrisch leitfähige Beschichtung 8 nicht direkt auf die Innenscheibe 3 aufzubringen, sondern diese zunächst auf einem Träger, beispielsweise eine Kunststofffolie, aufzubringen, der anschließend mit der Außen- und Innenscheibe 2, 3 verklebt wird. Alternativ kann die Trägerfolie mit Klebefolien (z.B. PVB-Folien) verbunden und als Dreischichtenanordnung (Trilayer) mit Innen- und Außenscheibe 2, 3 verklebt werden. Die heizbare, elektrisch leitfähige Beschichtung 8 wird vorzugsweise durch Sputtern oder Magnetron-Kathodenzerstäubung auf die Innen- oder Außenscheibe 2, 3 aufgebracht.

Wie in der Figur 1 dargestellt, ist die elektrisch leitfähige Beschichtung 8 angrenzend an die ersten Seiten 6, 6', d.h. am oberen und unteren Scheibenrand 5, mit einer bandförmigen oberen Sammelleitung oder Busbar 11 und einer bandförmigen unteren Sammelleitung 11' elektrisch leitend verbunden und zu diesem Zweck mit den beiden Sammelleitungen 11, 11' beispielsweise galvanisch gekoppelt. Die obere Sammelleitung 11 ist zur Verbindung mit dem einen Pol einer nicht dargestellten Spannungsquelle vorgesehen. Die untere Sammelleitung 11' ist zur Verbindung mit dem entgegengesetzten Pol der nicht dargestellten Spannungsquelle vorgesehen. Die beiden Sammelleitungen 11, 11' gegensätzlicher Polarität dienen für eine gleichmäßige Einleitung und Verteilung des Heizstroms in das zwischen ihnen befindliche Heizfeld 12 der heizbaren Beschichtung 8. Die beiden Sammelleitungen 11, 11' sind beispielsweise auf die elektrisch leitfähige Beschichtung 8 gedruckt und haben jeweils einen zumindest annähernd geradlinigen Verlauf.

Die obere Sammelleitung 11 kann in zwei voneinander getrennte Teilbereiche untergliedert sein.

Unterhalb der oberen Sammelleitung ist eine erste beschichtungsfreie Zone 14 mit einem von der elektrisch leitfähigen Beschichtung 8 gebildeten Zonenrand 16 angeordnet.

Die die erste beschichtungsfreie Zone 14 vollständig umlaufende Zusatzelektrode 15, 15', 15" ist über das Heizfeld 12 der elektrisch leitfähigen Beschichtung 8 mit der der oberen Sammelleitung 11 und der unteren Sammelleitung 11' galvanisch gekoppelt.

Die beschichtungsfreien Zone 14 hat hier beispielsweise eine zumindest annähernd rechteckige Kontur. Sie sind zumindest für einen Teil des elektromagnetischen Spektrums (z.B. IR-Strahlung, Funkwellen im Ultrakurz-, Kurz- und Langwellenbereich) durchlässig, um einen reibungslosen Datenverkehr durch die Windschutzscheibe 1 zu ermöglichen. Die beschichtungsfreie Zone 14 kann beispielsweise durch vorheriges Maskieren beim Aufbringen der elektrisch leitfähigen Beschichtung 8 auf die Innenscheibe 3 hergestellt werden. Alternativ kann sie nach Aufbringen der elektrisch leitfähigen Beschichtung 8 auch durch chemischen und/oder mechanischen Abtrag beispielsweise mittels Ätzen oder Einsatz eines Reibrads hergestellt werden.

Die obere Sammelleitung 11 und die untere Sammelleitung 11' sowie die Zusatzelektrode 15, 15', 15" werden durch Aufdrucken, einer metallischen Siebdruckpaste, insbesondere einer Silberpaste, mittels eines Siebdruckverfahrens auf die elektrisch leitfähige Beschichtung 8 vorzugsweise in einem Verfahrensschritt hergestellt.

Erfindungsgemäß wird dabei für die Herstellung der Sammelleitungen 11 eine helle Silberpaste eines Silbergehalts von 80 Gew.-%, bezogen auf ihre Gesamtmenge, verwendet.

Erfindungsgemäß wird dabei für die Herstellung der Zusatzelektrode 15,15', 15" eine dunkle Silberpaste eines Silbergehalts von 65 Gew.-%, bezogen auf ihre Gesamtmenge, verwendet.

Die resultierende Zusatzelektrode 15,15', 15" weist das 0,15-fache der elektrischen Leitfähigkeit der Sammelleitungen 11, 11' auf.

Das erfindungsgemäße Verfahren wird so durchgeführt, dass die Sammelleitungen 11 und 11' vollständig und die erste beschichtungsfreie Zone 14 nur teilweise von dem Maskierungsstreifen 13 bedeckt ist

Durch die erfindungsgemäße Verwendung von Silberpasten unterschiedlicher Silbergehalte erfüllt die erfindungsgemäße transparente Scheibe gemäß der Figur 1 nicht nur die Anforderungen der OEM an die elektrischen Eigenschaften, insbesondere die Unterdrückung von Hot Spots beim Anlegen einer Speisespannung und bei längerem Betrieb, sondern auch die Anforderungen an die Farbgestaltung.

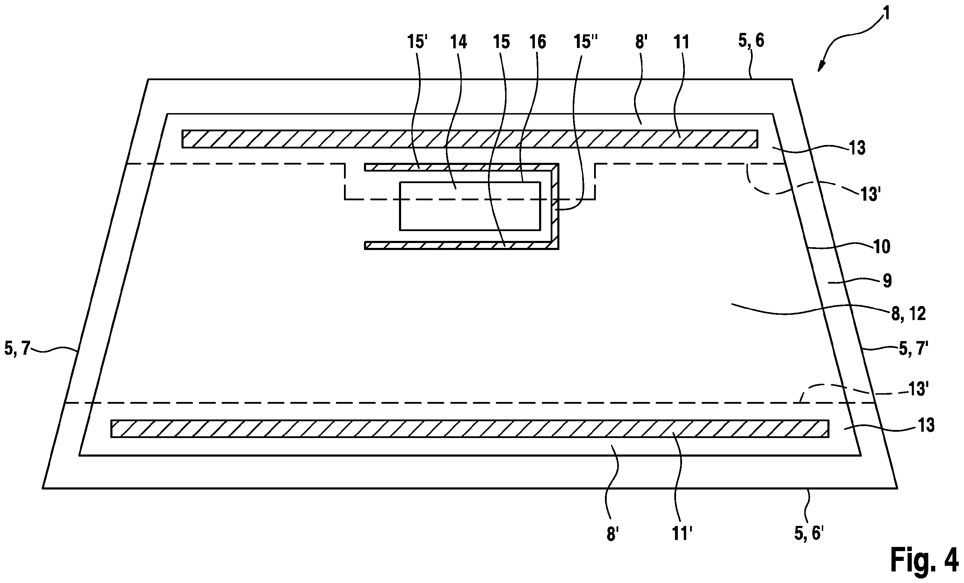

Die Figur 4 zeigt eine transparente Windschutzscheibe 1 eines Kraftfahrzeugs von der Innenseite her gesehen. Die Windschutzscheibe 1 ist auch hier als Verbundglasscheibe ausgeführt, deren Aufbau anhand der Darstellung eines vertikalen Schnitts durch einen Ausschnitt der Windschutzscheibe 1 in der Figur 2 und anhand der perspektivischen Schnittdarstellung eines Ausschnitts der Windschutzscheibe 1 in der Figur 3 veranschaulicht wird.

Die transparente Windschutzscheibe 1 gemäß der Figur 4 unterscheidet sich von der transparenten Windschutzscheibe 1 gemäß der Figur 1 lediglich durch die Verwendung einer Zusatzelektrode 15,15', 15", die die beschichtungsfreie Zone 14 nur abschnittsweise zu drei Viertel der Strecke des Zonenrands 16 umgibt.

Durch die erfindungsgemäße Verwendung von Silberpasten unterschiedlicher Silbergehalte erfüllt die erfindungsgemäße transparente Scheibe gemäß der Figur 4 nicht nur Anforderungen der OEM an die elektrischen Eigenschaften, insbesondere die Unterdrückung von Hot Spots beim Anlegen einer Speisespannung und bei längerem Betrieb, sondern auch die Anforderungen an die Farbgestaltung.

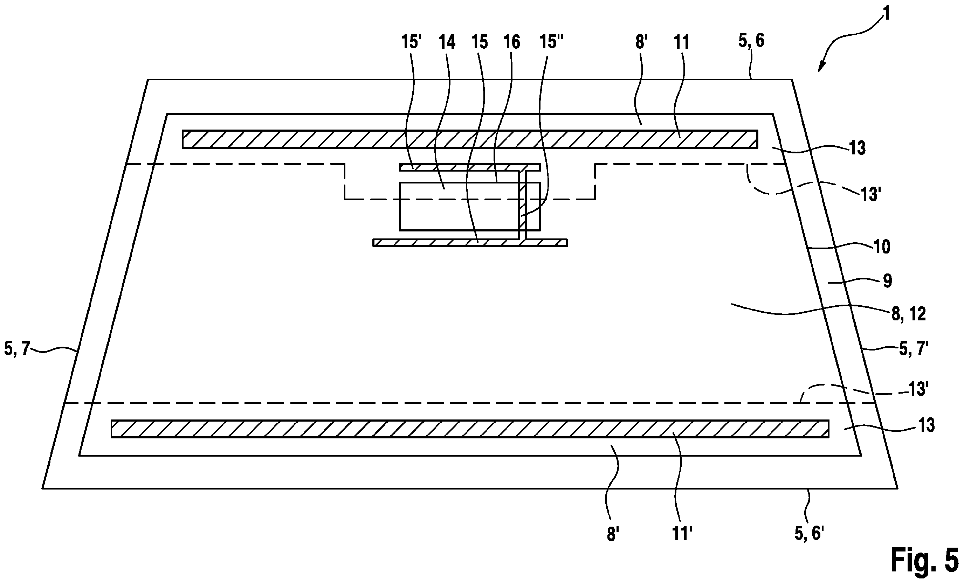

Die Figur 5 zeigt eine transparente Windschutzscheibe 1 eines Kraftfahrzeugs von der Innenseite her gesehen. Die Windschutzscheibe 1 ist auch hier als Verbundglasscheibe ausgeführt, deren Aufbau anhand der Darstellung eines vertikalen Schnitts durch einen Ausschnitt der Windschutzscheibe 1 in der Figur 2 und anhand der perspektivischen Schnittdarstellung eines Ausschnitts der Windschutzscheibe 1 in der Figur 3 veranschaulicht wird.

Die transparente Windschutzscheibe 1 gemäß der Figur 5 unterscheidet sich von der transparenten Windschutzscheibe 1 gemäß der Figur 1 lediglich durch die Verwendung einer Zusatzelektrode 15,15', 15", die die beschichtungsfreie Zone 14 nur abschnittsweise etwa zur Hälfte der Strecke des Zonenrands 16 als Teilbereiche 15, 15' der Zusatzelektrode umgibt. Diese beiden Teilbereiche 15,15' werden durch einen Teilbereich 15", der etwa ein Viertel der Strecke des Zonenrands 16 ausmacht und abschnittsweise durch die beschichtungsfreie Zone 14 längs eines Abschnitts des Zonenrands 16 geführt ist, verbunden.

Durch die erfindungsgemäße Verwendung von Silberpasten unterschiedlicher Silbergehalte erfüllt die erfindungsgemäße transparente Scheibe gemäß der Figur 5 nicht nur Anforderungen der OEM an die elektrischen Eigenschaften, insbesondere die Unterdrückung von Hot Spots beim Anlegen einer Speisespannung und bei längerem Betrieb, erfüllt, sondern auch die Anforderungen an die Farbgestaltung.

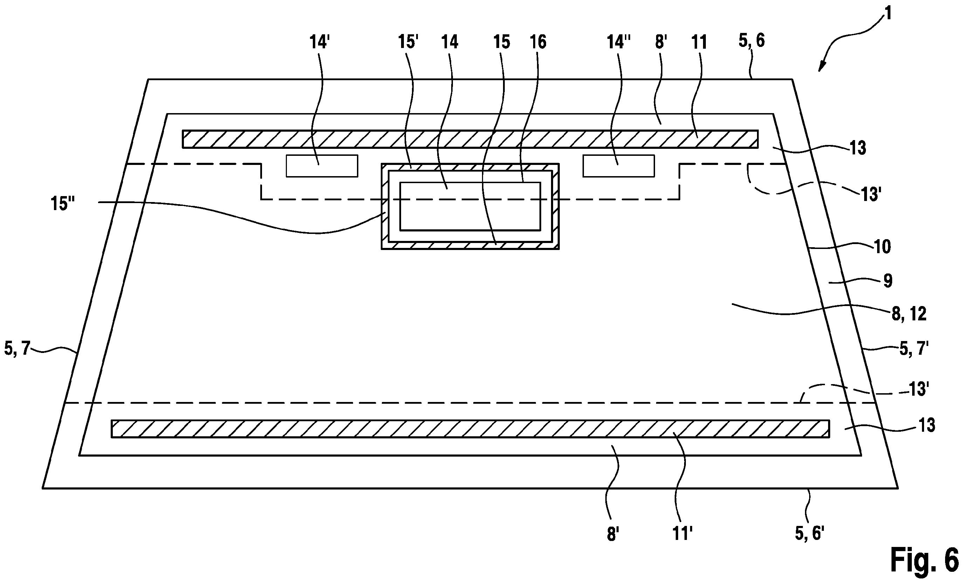

Die Figur 6 zeigt eine transparente Windschutzscheibe 1 eines Kraftfahrzeugs von der Innenseite her gesehen. Die Windschutzscheibe 1 ist auch hier als Verbundglasscheibe ausgeführt, deren Aufbau anhand der Darstellung eines vertikalen Schnitts durch einen Ausschnitt der Windschutzscheibe 1 in der Figur 2 und anhand der perspektivischen Schnittdarstellung eines Ausschnitts der Windschutzscheibe 1 in der Figur 3 veranschaulicht wird.

Die transparente Windschutzscheibe 1 gemäß der Figur 6 unterscheidet sich von der transparenten Windschutzscheibe 1 gemäß der Figur 1 lediglich dadurch, dass zusätzlich zu der beschichtungsfreien Zone 14 links und rechts von ihr und unterhalb der Sammelleitung 11 jeweils eine weitere beschichtungsfreie Zone 14' und 14" angeordnet sind, die von der Markierungsstreifen 13, 13' vollständig bedeckt sind.

Durch die erfindungsgemäße Verwendung von Silberpasten unterschiedlicher Silbergehalte erfüllt die erfindungsgemäße transparente Scheibe gemäß der Figur 6 nicht nur Anforderungen der OEM an die elektrischen Eigenschaften, insbesondere die Unterdrückung von Hot Spots beim Anlegen einer Speisespannung und bei längerem Betrieb, erfüllt, sondern auch die Anforderungen an die Farbgestaltung.

Ein weiterer Aspekt der Erfindung umfasst eine transparente Scheibe (1) mit mindestens einer heizbaren, elektrisch leitfähigen Beschichtung (8), die mit mindestens zwei zum elektrischen Verbinden mit den beiden Polen einer Spannungsquelle vorgesehenen Sammelleitungen (11, 11') so verbunden ist, dass durch Anlegen einer Speisespannung ein Heizstrom über ein zwischen den mindestens zwei Sammelleitungen gebildetes Heizfeld (12) fließt, wobei das Heizfeld (12) zumindest eine beschichtungsfreie Zone (14) enthält, welche von einem von zumindest abschnittsweise von der elektrisch leitfähigen Beschichtung (8) gebildeten Zonenrand (16) der beschichtungsfreien Zone (14) begrenzt wird und welche von mindestens einer Zusatzelektrode (15, 15', 15") zumindest abschnittsweise umgeben ist, wobei
- die mindestens eine Zusatzelektrode (15,15', 15") mit den Sammelleitungen (11, 11') über das Heizfeld (12) der Beschichtung (8) elektrisch verbunden ist und
- die mindestens zwei Sammelleitungen (11, 11') eine helle, silberne Farbe und die Zusatzelektrode eine dunkle Farbe aufweisen.

Die Erfindung umfasst des Weiteren eine transparente Scheibe (1), wobei die mindestens zwei Sammelleitungen (11, 11') einen höheren Silbergehalt als die mindestens eine Zusatzelektrode (15, 15', 15") aufweisen.

Die Erfindung umfasst des Weiteren eine transparente Scheibe (1), wobei die elektrische Leitfähigkeit der mindestens einen Zusatzelektrode (15, 15', 15") das 0,05- bis 0,3-fache der elektrischen Leitfähigkeit der mindestens zwei Sammelleitungen (11, 11') beträgt.

Die Erfindung betrifft des Weiteren eine transparente Scheibe (20), wobei die mindestens zwei Sammelleitungen (11, 11') eine helle, silberne Farbe mit L* >65, bevorzugt >80 und die mindestens eine Zusatzelektrode (15, 15', 15") eine dunkle Farbe mit L* <65, bevorzugt <50, aufweisen.

Ein weiterer Aspekt der Erfindung umfasst eine transparente Scheibe (1) mit mindestens einer heizbaren, elektrisch leitfähigen Beschichtung (8), die mit mindestens zwei zum elektrischen Verbinden mit den beiden Polen einer Spannungsquelle vorgesehenen Sammelleitungen (11, 11') so verbunden ist, dass durch Anlegen einer Speisespannung ein Heizstrom über ein zwischen den mindestens zwei Sammelleitungen gebildetes Heizfeld (12) fließt, wobei das Heizfeld (12) zumindest eine beschichtungsfreie Zone (14) enthält, welche von einem von zumindest abschnittsweise von der elektrisch leitfähigen Beschichtung (8) gebildeten Zonenrand (16) der beschichtungsfreien Zone (14) begrenzt wird und welche von mindestens einer Zusatzelektrode (15, 15', 15") zumindest abschnittsweise umgeben ist, wobei
- die mindestens eine Zusatzelektrode (15,15', 15") mit den Sammelleitungen (11, 11') über das Heizfeld (12) der Beschichtung (8) elektrisch verbunden ist und
- die mindestens zwei Sammelleitungen (11, 11') eine helle, silberne Farbe mit L* >65, bevorzugt >80 und die mindestens eine Zusatzelektrode (15, 15', 15") eine dunkle Farbe mit L* <65, bevorzugt <50, aufweisen.

## Patentansprüche

1. Transparente Scheibe (1) mit mindestens einer heizbaren, elektrisch leitfähigen Beschichtung (8), die mit mindestens zwei zum elektrischen Verbinden mit den beiden Polen einer Spannungsquelle vorgesehenen Sammelleitungen (11, 11') so verbunden ist, dass durch Anlegen einer Speisespannung ein Heizstrom über ein zwischen den mindestens zwei Sammelleitungen gebildetes Heizfeld (12) fließt, wobei das Heizfeld (12) zumindest eine beschichtungsfreie Zone (14) enthält, welche von einem von zumindest abschnittsweise von der elektrisch leitfähigen Beschichtung (8) gebildeten Zonenrand (16) der beschichtungsfreien Zone (14) begrenzt wird und welche von mindestens einer Zusatzelektrode (15, 15', 15") zumindest abschnittsweise umgeben ist,
wobei die mindestens eine Zusatzelektrode (15,15', 15") mit den Sammelleitungen (11, 11') über das Heizfeld (12) der Beschichtung (8) elektrisch verbunden ist **dadurch gekennzeichnet, dass**
- die mindestens zwei Sammelleitungen (11, 11') eine helle, silberne Farbe und die Zusatzelektrode eine dunkle Farbe aufweisen, wobei die mindestens zwei Sammelleitungen (11, 11') mithilfe einer Silberpaste eines Silbergehalts von 70 bis 90 Gew.-%, bezogen auf die Gesamtmenge der Silberpaste, und die mindestens eine Zusatzelektrode (15, 15', 15") mithilfe einer Silberpaste eines Silbergehalts von 50 bis <70 Gew.-%, bezogen auf die Gesamtmenge der Silberpaste, hergestellt sind.

2. Transparente Scheibe (1) nach Anspruch 1, **dadurch gekennzeichnet, dass** die elektrische Leitfähigkeit der mindestens einen Zusatzelektrode (15, 15', 15") das 0,05- bis 0,3-fache der elektrischen Leitfähigkeit der mindestens zwei Sammelleitungen (11, 11') beträgt.

3. Transparente Scheibe (1) nach Anspruch 1 oder 2, **dadurch gekennzeichnet, dass** die mindestens zwei Sammelleitungen (11, 11') eine helle, silberne Farbe mit L* > 65, bevorzugt >80, und/oder die mindestens eine Zusatzelektrode (15, 15', 15") eine dunkle Farbe mit L* ≤ 65, bevorzugt <50, aufweisen, wobei L* die Helligkeit einer Farbe gemäß EN ISO 11664-4 angibt.

4. Transparente Scheibe (1) nach einem der Ansprüche 1 bis 3, **dadurch gekennzeichnet, dass** die mindestens eine Zusatzelektrode (15, 15', 15") zumindest abschnittsweise geradlinig, wellenförmig, mäanderförmig, sägezahnförmig und/oder zickzackförmig verläuft.

5. Transparente Scheibe (1) nach einem der Ansprüche 1 bis 4, **dadurch gekennzeichnet, dass** die mindestens eine Zusatzelektrode (15, 15', 15") und die mindestens zwei Sammelleitungen (11, 11') in einem Verfahrensschritt herstellbar sind.

6. Transparente Scheibe (1) nach Anspruch 5, **dadurch gekennzeichnet, dass** die mindestens eine Zusatzelektrode (15, 15', 15") und die mindestens zwei Sammelleitungen (11, 11') durch Siebdruck herstellbar sind.

7. Transparente Scheibe (1) nach einem der Ansprüche 1 bis 6, **dadurch gekennzeichnet, dass** die mindestens eine beschichtungsfreie Zone (14) der im eingebauten Zustand der transparenten Scheibe (1) oberen Sammelleitung (11) räumlich zugeordnet ist.

8. Transparente Scheibe (1) nach einem der Ansprüche 1 bis 7, **dadurch gekennzeichnet, dass** die beschichtungsfreie Zone (14) nur abschnittsweise von einem Maskierungsstreifen 13,13' bedeckt ist.

9. Verfahren zur Herstellung einer transparenten Scheibe (1) gemäß einem der Ansprüche 1 bis 8 mit den folgenden Verfahrensschritten:
(A) Herstellen einer elektrisch leitfähigen Beschichtung (8),
(B) Herstellen mindestens einer beschichtungsfreien Zone (14) oder mindestens zweier, beschichtungsfreier Zonen (14, 14', 14") in der elektrisch leitfähigen Beschichtung (8) und im Heizfeld (12),
(C) Ausbilden von mindestens zwei, insbesondere zwei, mit den beiden Polen einer Spannungsquelle verbundenen Sammelleitungen (11, 11'), die mit der elektrisch leitfähigen Beschichtung (8) elektrisch verbunden sind, so dass durch Anlegen einer Speisespannung ein Heizstrom über ein zwischen den beiden Sammelleitungen (11, 11') befindliches Heizfeld (12) fließt,
(D) Herstellen mindestens einer zum elektrischen Verbinden mit den beiden Sammelleitungen (11, 11') vorgesehenen, die mindestens eine beschichtungsfreie Zone (14) wenigstens abschnittsweise umgebenden Zusatzelektrode (15, 15', 15"),
**dadurch gekennzeichnet, dass** für die Herstellung der mindestens zwei Sammelleitungen (11, 11') eine Silberpaste verwendet wird, die helle, silberfarbene Sammelleitungen (11 ,11") liefert, und für die Herstellung der mindestens einen Zusatzelektrode (15, 15', 15") eine Silberpaste verwendet wird, die dunkle Zusatzelektroden (15, 15', 15") liefert, wobei die für die Herstellung der mindestens zwei Sammelleitungen (11, 11') verwendete Silberpaste einen Silbergehalt von 70 bis 90 Gew.-%, bezogen auf die Gesamtmenge der Silberpaste, hat und die für die Herstellung der mindestens einen Zusatzelektrode (15, 15', 15") verwendete Silberpaste einem Silbergehalt von 50 bis < 70 Gew.-%, bezogen auf die Gesamtmenge der Silberpaste, hat.

10. Verfahren nach Anspruch 9, **dadurch gekennzeichnet, dass** die Verfahrensschritte (C) und (D) gleichzeitig mithilfe des Siebdrucks durchgeführt werden.

11. Verfahren nach Anspruch 9 oder 10, **dadurch gekennzeichnet, dass** die Verfahrensschritte (C) und (D) so ausgeführt werden, dass die elektrische Leitfähigkeit der resultierenden mindestens einen Zusatzelektrode (15, 15', 15") das 0,05- bis 0,3-fache der elektrischen Leitfähigkeit der Sammelleitungen (11, 11') beträgt.

12. Verwendung der transparenten Scheibe (1) gemäß einem der Ansprüche 1 bis 8 und der nach dem Verfahren gemäß einem der Ansprüche 9 bis 11 hergestellten transparenten Scheibe (1) als funktionales und/oder dekoratives Einzelstück und als Einbauteil in Möbeln, Geräten, Gebäuden und Fortbewegungsmitteln.

## Claims

1. Transparent pane (1) with at least one heatable, electrically conductive coating (8), that is connected to at least two collection lines (11, 11') provided for the electrical connection to the two poles of a voltage source such that by application of a supply voltage, a heating current flows over a heating field (12) formed between the at least two collection lines, wherein the heating field (12) contains at least one coating-free zone (14) that is delimited by a zone edge (16) of the coating-free zone (14) formed at least in sections by the electrically conductive coating (8) and that is surrounded at least section-wise by at least one additional electrode (15, 15', 15"), wherein the at least one additional electrode (15,15', 15") is electrically connected to the collection lines (11, 11') via the heating field (12) of the coating (8), **characterized in that**
- the at least two collection lines (11, 11') have a bright, silver color and the additional electrode has a dark color, wherein the at least two collection lines (11, 11') can be produced using a silver paste with a silver content from 70 to 90 wt.-%, based on the total amount of the silver paste, and the at least one additional electrode (15, 15', 15") are produced using a silver paste with a silver content from 50 to <70 wt.-%, based on the total amount of the silver paste.

2. Transparent pane (1) according to claim 1, **characterized in that** the electrical conductivity of the at least one additional electrode (15, 15', 15") is 0.05 to 0.3 times the electrical conductivity of the at least two collection lines (11, 11').

3. Transparent pane (1) according to claim 1 or 2, **characterized in that** the at least two collection lines (11, 11') have a bright, silver color with L* >65, preferably >80, and/or the at least one additional electrode (15, 15', 15") has a dark color with L* ≤65, preferably <50, where L* indicates the luminance of a color according to EN ISO 11664-4.

4. Transparent pane (1) according to one of claims 1 through 3, **characterized in that** the at least one additional electrode (15, 15', 15") runs, at least section-wise, rectilinear, wave-shaped, meander-shaped, sawtooth-shaped, and/or zigzag-shaped.

5. Transparent pane (1) according to one of claims 1 through 4, **characterized in that** the at least one additional electrode (15, 15', 15") and the at least two collection lines (11, 11') can be produced in one process step.

6. Transparent pane (1) according to claim 5, **characterized in that** the at least one additional electrode (15, 15', 15") and the at least two collection lines (11, 11') can be produced by screenprinting.

7. Transparent pane (1) according to one of claims 1 through 6, **characterized in that** the at least one coating-free zone (14) is spatially associated with the upper collection line (11) in the installed state of the transparent pane (1).

8. Transparent pane (1) according to one of claims 1 through 7, **characterized in that** the coating-free zone (14) is covered only section-wise by a masking strip 13,13'.

9. Method for producing a transparent pane (1) according to one of claims 1 through 8 comprising the following process steps:
(A) producing an electrically conductive coating (8),
(B) producing at least one coating-free zone (14) or at least two coating-free zones (14, 14', 14") in the electrically conductive coating (8) and in the heating field (12),
(C) forming at least two, in particular, two, collection lines (11, 11') connected to the two poles of a voltage source, which are electrically connected to the electrically conductive coating (8) such that by application of a supply voltage, a heating current flows over a heating field (12) situated between the two collection lines (11, 11'),
(D) producing at least one additional electrode (15, 15', 15") provided for the electrical connection to the two collection lines (11, 11') and, at least section-wise, surrounding the at least one coating-free zone (14),
**characterized in that** for the production of the at least two collection lines (11, 11'), a silver paste that delivers bright, silver colored collection lines (11,11') is used, and for the production of the at least one additional electrode (15, 15', 15"), a silver paste that delivers dark additional electrodes (15, 15', 15") is used, wherein the silver paste used for the production of the at least two collection lines (11, 11') has a silver content a silver content from 70 to 90 wt.-%, based on the total amount of the silver paste, and the silver paste used for the production of the at least one additional electrode (15, 15', 15") has a silver content from 50 to <70 wt.-%, based on the total amount of the silver paste.

10. Method according to claim 9, **characterized in that** the process steps (C) and (D) are performed simultaneously using screenprinting.

11. Method according to claim 9 or 10, **characterized in that** the process steps (C) and (D) are carried out such that the electrical conductivity of the resultant at least one additional electrode (15, 15', 15") is 0.05 to 0.3 times the electrical conductivity of the collection lines (11 11').

12. Use of the transparent pane (1) according to one of claims 1 through 8 and of the transparent pane (1) produced according to the method according to one of claims 9 through 11 as a functional and/or decorative individual piece and as a built-in component in furniture, appliances, buildings, and means of transportation.

## Revendications

1. Vitre transparente (1) avec au moins un revêtement chauffant, conducteur d'électricité (8), qui est relié a au moins deux électrodes collectrices (11, 11') fournies pour le raccordement électrique avec les deux pôles d'une source de tension, de telle manière que lors de l'application d'une tension d'alimentation, un courant de chauffage circule par une zone chauffante (12) formée entre lesdites au moins deux électrodes collectrices, où le champ de chauffage (12) comprend au moins une zone sans revêtement (14) qui est délimitée par une bordure de zone (16) de la zone sans revêtement (14) formée au moins par sections par le revêtement conducteur d'électricité (8) et qui est entourée par au moins une électrode supplémentaire (15, 15', 15") où ladite au moins une électrode supplémentaire (15,15', 15") est reliée électriquement avec les électrodes collectrices (11, 11') par la zone chauffante (12) du revêtement (8) **caractérisée en ce que**
- les au moins deux électrodes collectrices (11, 11') présentent une couleur argentée et lumineuse et l'électrode supplémentaire présente une couleur foncée, où lesdites au moins deux électrodes collectrices (11, 11') sont fabriquées à l'aide d'une pâte d'argent d'un contenu argenté de 70 à 90 %, en poids basé sur la quantité totale de la pâte d'argent, et ladite au moins une électrode supplémentaire (15, 15', 15") à l'aide d'une pâte d'argent d'un contenu en argent de 50 à 70% en poids, basé sur le quantité totale de pâte d'argent.

2. Vitre transparente (1) selon la revendication 1, **caractérisée en ce que** la conductivité électrique de ladite au moins une électrode auxiliaire (15, 15', 15") qui se situe entre 0,05 et 0,3 fois la conductivité électrique desdites au moins deux électrodes collectrices (11, 11').

3. Vitre transparente (1) selon la revendication 1 ou 2, **caractérisée en ce que** lesdites au moins deux électrodes collectrices (11, 11') présentent une couleur argentée vive avec L* >65, de préférence > 80, et/ou ladite au moins une électrode supplémentaire (15, 15', 15") présente une couleur avec L*≤65, de préférence ≤50, où L* indique la luminosité d'une couleur selon EN ISO 11664-4.

4. Vitre transparente (1) selon l'une des revendications 1 à 3, **caractérisée en ce qu'**au moins une électrode supplémentaire (15, 15', 15") au moins par sections est rectiligne, ondulée, en forme de méandre, en forme de dent de scie et/ou en forme de zigzag.

5. Vitre transparent (1) selon l'une ou l'autre des réclamations 1 à 4, **caractérisée en ce que** ladite au moins une électrode supplémentaire (15, 15', 15") et lesdites au moins deux électrodes collectrices (11, 11') peuvent être fabriquées en une seule étape de procédé.

6. Vitre transparente (1) selon la revendication 5, **caractérisée en ce que** ladite au moins une électrode supplémentaire (15, 15', 15") et lesdites au moins deux électrodes collectrices (11, 11') peuvent être fabriquées par sérigraphie.

7. Vitre transparente (1) selon l'une des revendications 1 à 6, **caractérisée en ce que** ladite au moins une zone sans revêtement (14) est assignée spatialement à l'électrode collectrice (11) supérieure de la vitre transparente (1) à l'état montée.

8. Vitre transparente (1) selon l'une des revendications 1 à 7, **caractérisée en ce que** la zone sans revêtement (14) n'est que partiellement couverte par une bande de masquage 13,13'.

9. Procédé de production d'une vitre transparente (1) selon l'une des revendications 1 à 8 avec les étapes de procédé suivantes :
(A) fabrication d'un revêtement électriquement conducteur (8),
(B) fabrication d'au moins une zone sans revêtement (14) ou au moins deux zones sans revêtement (14, 14', 14") dans le revêtement électriquement conducteur (8) et dans la zone chauffante (12),
(C) formation d'au moins deux, en particulier deux électrodes collectrices, reliées avec les deux pôles d'une source de tension (11, 11') qui sont reliés au revêtement conducteur d'électricité (8) de telle manière que lors de l'application d'une tension d'alimentation, un courant de chauffage circule par une zone chauffante (12) situé entre les deux électrodes collectrices (11, 11'),
(D) fabrication d'au moins une électrode supplémentaire (15, 15', 15") fournie pour la connexion électrique aux deux électrodes collectrices (11, 11') entourant au moins partiellement ladite au moins une zone sans revêtement (14),
**caractérisé en ce que** pour la fabrication desdites au moins deux électrodes collectrices (11, 11') une pâte d'argent est utilisée, qui fournit des électrodes collectrices claires argentées (11 ,11 "), et pour la production de ladite au moins une électrode supplémentaire (15, 15', 15") une pâte d'argent est utilisée, qui fournit des électrodes supplémentaires foncées (15, 15', 15") où la teneur en argent de la pâte d'argent utilisée pour la fabrication desdites au moins deux électrodes collectrices (11, 11') est de 70 à 90% en poids, basée sur la quantité totale de la pâte d'argent, et la teneur en argent de la pâte d'argent utilisée pour la production de ladite au moins une électrode supplémentaire (15, 15', 15") est de 50 à 70% en poids, sur la base de la quantité totale de pâte d'argent.

10. Procédé selon la revendication 9, **caractérisée en ce que** les étapes de procédé (C) et (D) sont effectuées simultanément à l'aide de la sérigraphie.

11. La méthode selon la revendication 9 ou 10, **caractérisée en ce que** les étapes de procédé (C) et (D) sont effectuées de manière à ce que la conductivité électrique de ladite au moins une électrode supplémentaire (15, 15', 15") résultante est de 0,05 à 0,3 fois la conductivité électrique des électrodes collectrices (11, 11').

12. Utilisation de la vitre transparente (1) selon l'une des revendications 1 à 8 et la vitre transparente (1) produite selon le procédé de l'une des revendications 9 à 11 comme élément fonctionnel et/ou décoratif et comme élément pour installation dans les meubles, les appareils électroménagers, le bâtiment et les moyens de transport.
